# EUROPEAN PATENT APPLICATION

(11) **EP 2 110 777 A1**
(43) Date of publication of application: **21.10.2009**
(21) Application number: 08007314.1
(22) Date of filing: 14.04.2008
(51) Int. Cl.: G06N 3/04, G06N 3/00

(54) **Method and device for controlling an interactive robot**

(71) Applicant: Honda Research Institute Europe GmbH, 63073 Offenbach/Main (DE)
(72) Inventor: Mikhailova, Inna, 64293 Darmstadt (DE); Goerick, Christian, 63500 Selingenstadt (DE); Bolder, Bram, 63225 Langen (DE); Janssen, Herbert, 63303 Dreieich (DE)
(74) Representative: Rupp, Christian

(57) **Abstract**

A device for controlling an interactive robot, wherein the robot comprises at least one controller mapping sensory inputs to motor commands, comprises:
- means for generating an expectation of the robot's own state and/or the robot's environment;
- means for sensing the robot's actual state and/or environment;
- means for comparing the actual state and/or environment with the generated expectation;
- means for modulating the controller's behaviour, if the robot's actual state and/or environment differ/differs from the expectation; and
- means for operating the controller without modulation otherwise.

## Description

The present invention relates to a method and device for controlling an interactive robot.

### Technical background and state of the art

Robots, in particular humanoid robots, are increasingly required to perform desired tasks in unstructured environments without continuous human guidance. This autonomy requires that the robot is able to choose or plan its behaviour depending on anticipated future states of the robot's environment. However, the necessary planning may quickly become intractable, even in environments of intermediate complexity.

One approach for alleviating this intractability and to achieve robustness and fast adaptation to a changing environment is to provide reactive system components together with the anticipating system. Generally, a reactive system is understood as consisting of a number of simple or local controllers. Every controller implements certain behaviour as a mapping from sensory input to a motor command. These controllers are local in the sense that they are independent of other controllers and get all the information they need for producing an output from immediate sensory input (and not from a memory).

S. Hart et al. ("A framework for learning declarative structure", in Robotics: Science and Systems - Workshop on manipulation for human environments, Philadelphia, Pennsylvania, August 2006) present a hybrid architecture that uses reinforcement learning. However, this architecture always evaluates the future reward and always plans. It does not switch between reactive and expectation-driven mode, but only uses a reactive controller within a plan. For example, the planning routine decides which controller has to be activated, while the details of the control are decided on the level of local controllers.

US patent application US 2002/0169733 A1 describes an architecture for robot intelligence that enables a robot to learn new behaviours and create new behaviours sequences autonomously and interact with agent dynamically changing environment. Sensory information gets mapped onto a sensory ego-sphere (SES) that identifies important changes in the environment and functions essentially like short term memory. Behaviours are stored in a database that creates an active map from the robot's current state to a goal state and functions essentially like long term memory. A dream state converts recent activities stored in the short term memory and creates or modifies behaviours in the database. In other words, the system aims at combining the planning with responsiveness to a dynamic environment, based on a representation of the knowledge in form of an adaptive, growing database of possible chains of reactions. However, the described system allows only one step abstraction from sensory input to the entry of a database in form of pre- or post condition to an action.

It is therefore an object of the present invention, to provide an improved device for controlling an interactive robot.

### Short summary of the Invention

This object is achieved by a method for controlling an interactive robot according to independent claim 1. Advantageous embodiments are defined in the dependent claims.

With the proposed architecture, the reactive layer does not depend on a control signal coming from the instruction layer. In absence of expectation, the system simply behaves in a reactive manner. Therefore, the system is more robust: if the higher layer does not produce an output, the system does not break, but continues to interact with the environment with the help of the reactive layer.

A further advantage is that the abstraction layer may be implemented without requiring additional abilities on the side of the system. The existence of associative memory is sufficient for the system to behave in an expectation-driven way. As a result, unlike common approaches in reinforcement learning, the method and system according to the invention may act both in reactive and expectation-driven ways without having a complete work model and planning abilities.

### Brief description of the figures

These and other aspects and advantages of the present invention will become more apparent when studying the following detailed description, in connection with the figures, in which
Figure 1 shows a block diagram of a device for controlling an interactive robot according to a first embodiment of the invention;
Figure 2 shows a detailed diagram of an implementation of a reactive part and an abstraction layer in a system for controlling an interactive robot according to the invention;
Figure 3 shows an unfolded example of three successive steps of the expectation generation and evaluation loop; and
Figure 4 shows a flow chart for the generation of a teaching signal for the online speech learning.

### Detailed description of the invention

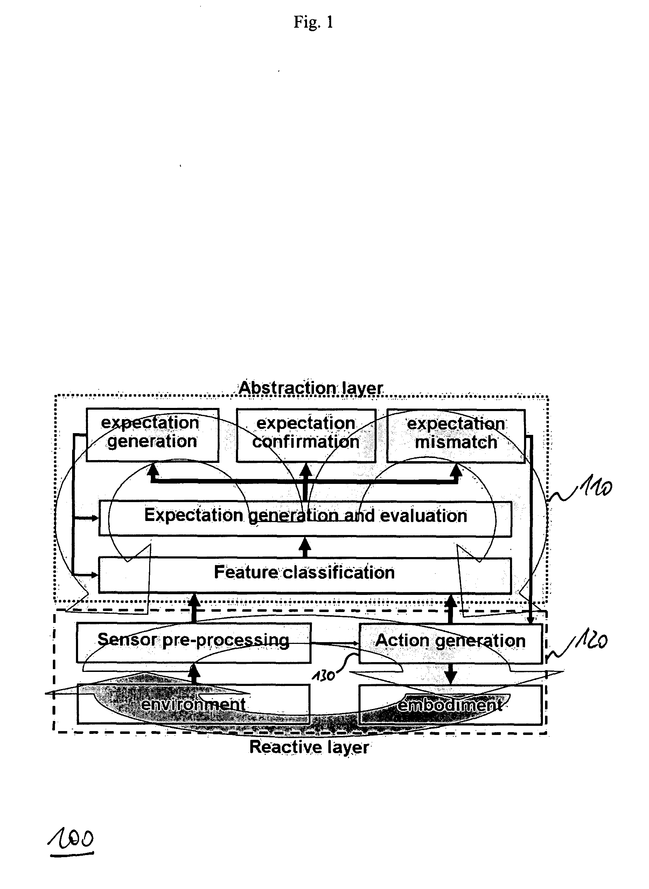

**Figure 1** shows a block diagram of a device 100 for controlling an interactive robot according to a first embodiment of the invention. The device comprises an abstraction layer 110 and a reactive layer 120. The reactive layer 120 may interact autonomously with the environment. The abstraction layer 110 may generate and evaluate expectations. The reactive layer 120 and the abstraction layer 110 are coupled such that the abstraction layer 110 may modulate elements in the reactive layer in order to resolve expectation mismatches, i.e. deviations between machine generated expectations and the actual state of the environment.

The loop on the lower part shows the reactive layer 120 (dashed). The abstraction layer 110 in the upper part generates and evaluates expectations (dotted box). An activation mismatch activates or triggers a behaviour that may potentially resolve the mismatch.

The reactive layer 120 may be organized as a set of controllers implementing behaviours, of which one or multiple can be active at any time. The decision on which controllers or behaviours are activated or deactivated at any time may be taken by an arbitration mechanism (sometimes also called arbiter, behaviour selection or action generation or selection mechanism) 130 that may be based on a competitive system. Each behaviour may be assigned a fitness value (sometimes also called behaviour value) and the competitive system may take the decision to activate or deactivate behaviours based on this fitness value and additional rules and constraints such as mutual or unidirectional inhibition of competing behaviours (e.g. pointing with the left arm and using the left arm to gesture), sequencing conditions (e.g. grasping an object may only happen after approaching an object is finished), global preference, i.e. certain behaviours may be generally preferred, and additional hysteresis effects.

The fitness value of the individual behaviours can be dynamically set by a behaviour specific evaluation of the sensor data and the internal state of the overall system (e.g. fitness for grasping may only be greater than 0 or zero only if graspable objects are within reaching distance of the robot).

A competitive mechanism implementing the above may be realized using differential equations, an artificial neural-net like structure, or more specialized solutions.

Biasing such a reactive behaviour selection scheme without sacrificing its basic reactive abilities may be achieved by adding a bias value to the fitness value of each behaviour, or in other words providing a vector of bias values, one for each behaviour. Thus a vector of zero (0) bias values will not change the reactive layer at all while positive or negative values can be used to positively or negatively influence the activation of the corresponding behaviours.

Such a bias vector can of course be used directly to influence the behaviour selection e.g. for feedback to the user or gesture generation, but it is also possible to take the internal activation state of the reactive layer at any point in time and use this state in order to reproduce the activation state at a later time and in a different situation by using the stored activation as a bias to the reactive layer. If used in this way, the activation state will only perfectly reproduce the stored activation state if the relevant environment and robot state conditions guiding the behaviour selection are identical to the original ones. In other cases, the reactive layer may modify the activation to fit the current situation thus enabling a much more consistent and realistic interaction with the environment.

The reactive interaction may consist of tracking an object or saliency-driven gaze selection as well as approaching the object, pointing at it or any other action. During this interaction, the abstraction system extracts and classifies the features that describe the environment as well as the behaviour of the system. For example, the system classifies the position of the object that objects relative to its body (left, right, up, down etc.) and the behaviour that the system executes (tracking, approach etc.).

The abstraction layer generates an expectation of what the output of the classifiers should be. Here, an expectation is understood as an explicit representation of the future values that describe the properties of the environment acquired via external sensors or the properties of the system itself, e.g. the actions that are executed of the state of the system's memory. The source of expectation can, but need not to be planning routine. Expectations may also be generated e.g. from an associative memory or from a predictive model.

As long as no expectations are active, the system may interact with the environment in a reactive way. If the expectation is active, the system may compare the actual classifications of the features to be expected ones by determining a difference between them. If the difference exceeds a pre-determined threshold (in which case a mismatch is assumed), the system may trigger a behaviour that may potentially resolve the contrast between the actual and the expected state. The resolving behaviour may be activated until the expected state is reached or a time-out withdraws the expectation.

Resolving is not restricted to a single behaviour only, but the complexity may be increased incrementally. For example, in case of a mismatch in the expectation of the visual features, the reactive system may simply switch which object to track. A more complex resolving action may be the initiation of a search for the expected feature, by tuning different channels in a saliency map that represents interesting locations in the scene as a basis for the system's decision where to look. For example, if the system is expecting an object on the right side, a mismatch may activate the map that highlights the right side of the image and inhibits the left part. Similarly, a mismatch in auditory features may activate a simple user-directed utterance that requires the user to pronounce a word or it may trigger the system to pronounce the right word on itself. The resolving action thus brings the system into a state that allows it to revaluate the correctness of the expectation and optionally to relearn it.

The expectation mismatch in the description of the internal action stage executed by the system may directly activate the respective actions via a bias to the competitive behaviour selection mechanism. Thus, the system may be taught "command"-like utterances that influence the internal action state of the system without disabling the autonomy.

The extension of the reactive layer by an abstraction layer based on expectation generation allows for active sensing, hypothesis testing and goal directed behaviour.

As the proposed abstraction layer is independent of higher layers, different sources of generating expectation may be integrated: associative memory, predictive models, attention and planning routines. This increases the robustness of the system because if one source of expectation fails, another one may take over.

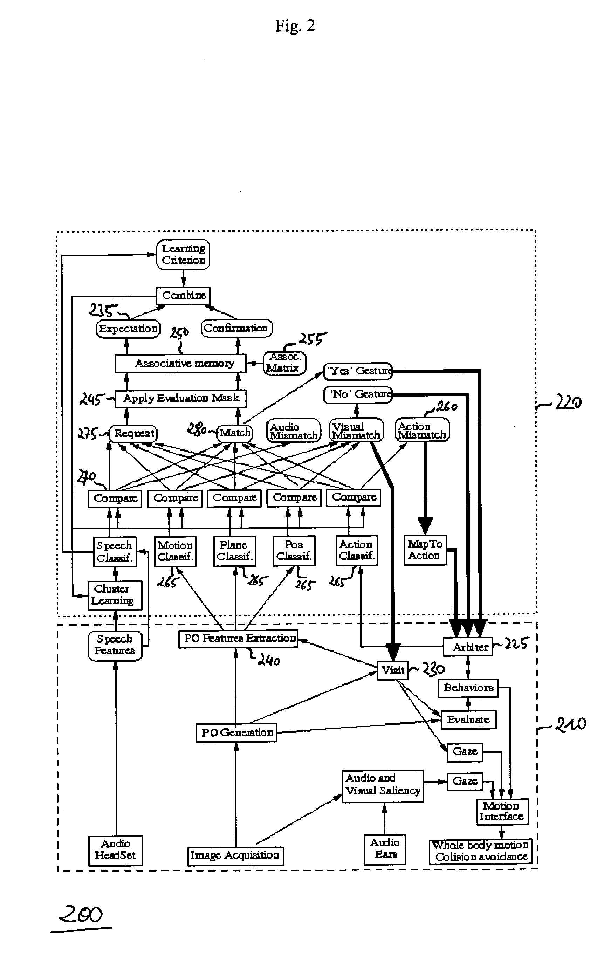

**Figure 2** shows a detailed overview of a possible implementation of a device for controlling an interactive robot according to the invention. Boxes represent modules or procedural steps while rounded boxes represent information that is input or output to the procedures/modules. The device 200 comprises an expectation generation module driven by associations to recognize the speech utterances, and a mismatch resolution module that acts via the visual attention and a bias to the competitive behaviour selection mechanism. The solid box 210 on the bottom shows an implementation of the reactive part that may comprise saliency-driven gazing and tracking/reaching for proto-objects. The dashed box 220 displays the abstraction layer of expectation generation based on associative memory. The thick arrows show how the abstraction layer modulates elements in the reactive layer in order to resolve expectation mismatches. The links to the arbiter module 225 modulate actuating behaviours. The link to the visit module 230 modulates the attention in the visual domain.

In one embodiment of the invention, the implementation of the reactive layer 210 may comprise a visual attention system. Visual entities that the robot can possibly interact with may be represented as so-called proto-objects (abbreviated as PO). These represent visually grouped feature clusters stabilized both in time and 3d space. They comprise, among other information, a position in different coordinate systems, status flags, and an id. All proto-objects at a given time may be collected into a list.

The visual attention system may comprise an id selector which selects one id of the proto-objects in the current list if the list is non-empty; else it is set to the invalid-id value. This selected id - the so-called visiting-id - may be used by other components in the system like directing the gaze direction, performing a locomotion or manipulation movement, or classifying its visual features. It is noted that all these other components may be designed to cope with invalid ids and with changing ids.

The id selector may autonomously select one id from the list. As long as the visiting-id selected in the previous iteration is still in the list, it does not need to change. If the visiting-id is no longer in the list or the list may change from empty to non-empty, one id may be selected from the list based on several criteria. These criteria may be priorities on the status flags of the proto-object or the minimal distance of the proto-object to the cameras. Ids with a priority below a threshold may be completely ignored. If the current list is empty or all entries are ignored, the visiting-id may be set to 'invalid'.

A system using the id selector described above is sufficient for stable and autonomous reactive behaviour to visual stimuli.

For top down influence, for instance from an expectation evaluation system wishing to change the attended visual entity, several modulatory inputs may be available for the selector. It is possible to stop visiting a given id - the so-called complete-id. If this id is available in the list of the currently available ids, it may be marked as 'visited'. If the complete-id is the current visiting-id, a new id may be selected using the same criteria as above. A 'clear' signal may allow the removal of the 'visited' status of all ids. The visit-request-id may select a new visiting-id if this id is in the current list, else the visiting-id may not change.

The id selector enhanced by the three modulatory inputs complete-id, visit-request-id, and clear allows a flexible, lightweight, and robust interface for top-down influence. This allows a loose coupling between the reactive system layer and an abstraction layer. It allows both the reactive system to continue if the abstraction layer is malfunctioning and the efficient modulation of top-down requested behaviour.

According to the invention, an implementation of the abstraction layer may further comprise a module for generating expectations 235. While a proto-object is stably tracked by the vision system described in the previous section, a module 240 may extract the features of the proto-object, the state of behaviour activation, and the speech features. In order to stabilize the learning, it is supposed that all non-speech features may be reliably classified. That means they have already been acquired in earlier developmental stages (e.g. the classification of flat surfaces is relevant for a depositing behaviour) or were pre-designed (so to speak genetically encoded). A mask 245 called 'evaluation mask' may be used for differentiating between reliable, pre-designed channels and channels to learn. This mask 245 filters the input to the associative memory 250 such that data from a channel to learn requests a confirmation, whereas the data from reliable channels sends a confirmation that may be used as a teaching signal. This mechanism will be explained more in detail below.

An attention mechanism may further restrict the channels that can generate teaching signals. According to the invention, attention may be implemented in the form of expectation for some particular feature channel. This expectation may be raised by specific, pre-designed user utterances ('learning criteria'). For example, if a user utters 'learn where this object is', an expectation of activity for any class in the position classifier may be generated. The link from a known 'learning criterion' utterance to a channel expectation is by itself an association and may thus be learned as well, instead of being pre-designed.

The fact that humans use words to name the features may also be known to the system and may be represented by a pre-designed association matrix 255 of the associative memory. It may comprise a non-zero element at location (i,j) if the feature classes (i) and (j) are associated. In contrast to detailed correlation, associations represent the general information that the features may be bound. Using this associative memory 250, the system may generate a teaching signal and may learn the speech classes.

Preferably, the classes are learned by online learning, thus they can immediately be evaluated. By using the associative memory 250 again, the speech channel may now generate expectations for non-speech-features. For example, as the human says 'table' the system expects to see the flat surface at the height of the waist. If the tracked object doesn't have the expected features then the expectation mismatch may inhibit the reactive tracking of this object. The system may switch to the tracking of another object until the expected object properties are seen or a time-out withdraws the expectation.

The expectation mismatch 260 in the description of the action executed by the system can directly activate the respective actions via a bias to the competitive behaviour selection mechanism 225. Thus the system can be taught 'command'-like utterances that influence the action of the system without disabling the autonomy.

Without expectations the system may continue to interact with its environment in a reactive manner.

In order to make the behaviour of the system understandable for the user, the robot may communicate the state of expectation. In case of the expectation mismatch it may shake its head ('No' gesture) and in case of the match it may nod ('Yes' gesture). The gestures may be triggered via the biases in the similar way as commands. The active evaluation of the expectation can be used for the refinement or relearning of the corresponding concept.

The output of every classifier 265 at every time step may be used as the bottom-up input to a so-called 'compare' module 270. The second input to this module may be a top-down expectation generated via the associative memory. The bottom-up feature classification may be compared to the expectation by building the difference between these two inputs. The 'compare' module has three outputs: 'request' 275, 'match' 280 and 'mismatch', e.g. the action mismatch designated by 260.

If the expectation confirms the classification (i.e. the difference does not exceed the threshold), then the bottom-up activity may be memorized as the internal state of the compare module 270 and may be propagated to its output that may be called 'match'.

If the classification contradicts the expectation (the difference exceeds the threshold), the compare module 270 may reset its internal state and may send the output that may be called 'mismatch'.

If the expectations for the particular feature are negligibly small and the internal state is negligibly small as well the compare module 270 may send an output 'request'.

Processing of the 'mismatch' output may be feature-specific. The outputs of all channels may be concatenated to a common 'match' and a common 'request'. These two vectors may be multiplied with the evaluation mask 245 that may define which channel should send a request and which channel a confirmation. The associations to these vectors may be generated by multiplication with the association matrix 255.

As the 'match' vector contains the features that were expected, the association to this vector may serve as a confirmation to not yet expected features. In terms of predictive models, this is a 'forward model'. The association to the 'request' is so to speak an 'inverse model'. It shows which features can generate the confirmative expectation for request. These two output vectors of the associative memory may be combined with the expectation generated by attention system (learning criteria) and sent back through the loop as an expectation vector. This vector is then split according to the used feature channel and every 'compare' module may receive its corresponding part as top-down expectation. This splitting step may close the loop of expectation-based perception.

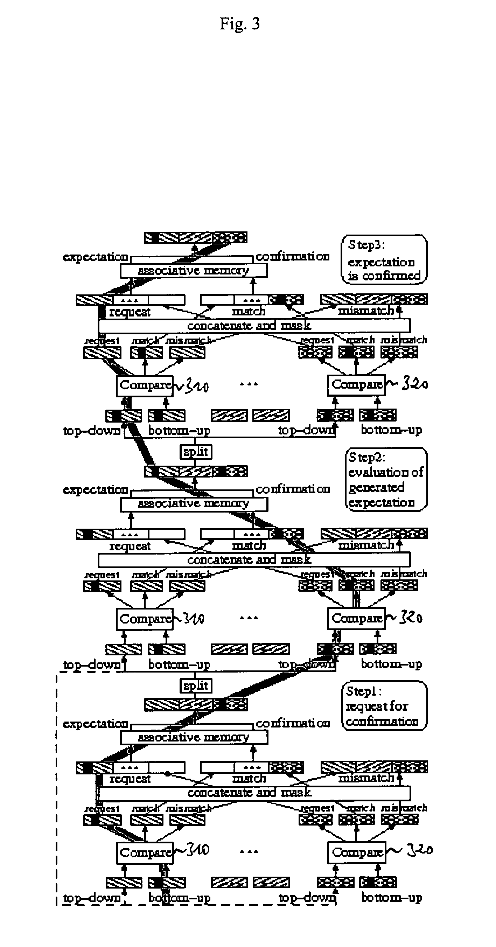

**Figure 3** shows an unfolded example of 3 successive steps of the above-described expectation generation and evaluation loop (the case of expectation match). The dashed line shows the feedback pathway if not unfolded. White spaces of request and match vectors show which parts are inhibited by the evaluation mask. For the sake of simplicity, only two feature channels are shown: one that generates the expectation and another one that can confirm the first one via the associative memory. The thick line in the background shows the progress of changes through the loop.

At Step 1 (bottom), the output of the first classifier is used as the bottom-up input to the first compare module 310. Here, the expectation for the particular feature is negligibly small and the internal state of the first compare module is negligibly small.

Therefore, the compare module 310 outputs a 'request' signal. Subsequently, an expectation is generated which may serve as a top-down input to a compare module of a second feature channel. This is illustrated in step2.

At Step 2 (middle) the generated expectation is evaluated. In other words, it is used as a top-down input to a compare module 320 of the second feature channel. The compare module 320 generates a 'match' signal indicating that the expectation (top-down input) confirms the classification via the second feature channel (i.e. the difference does not exceed the threshold).

At Step 3 (top) the expectation is then confirmed via the first feature channel. In particular, the expectation is fed into compare module 310 of the first feature channel, as a top-down input (difference to Step 1).

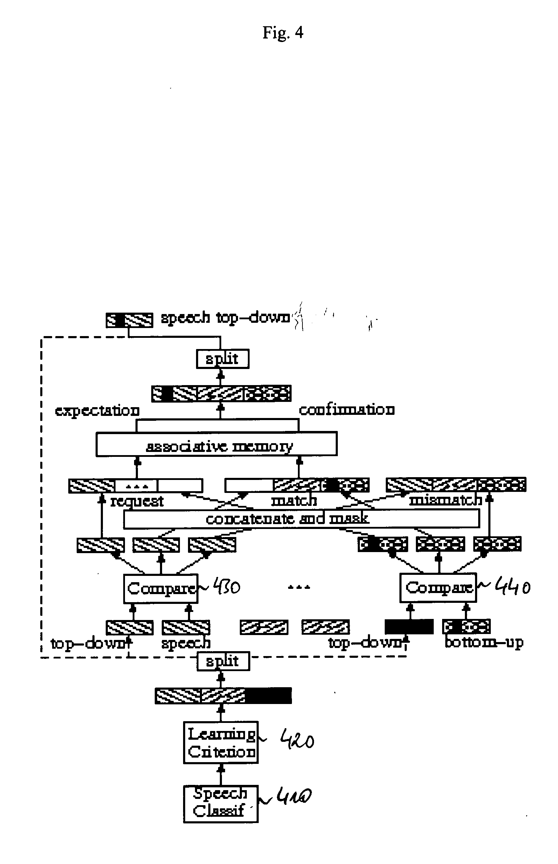

**Figure 4** shows the generation of a teaching signal for online-speech learning. At the bottom the expectation 420 for one feature channel (e.g. position) is generated from a specific utterance 410 (e.g. 'learn where this object is'). This top-down expectation is propagated through the loop in the standard way (see Figure 3) and generates the teaching signal for the speech shown at the top.

## Claims

1. A method for controlling an interactive robot, wherein the robot comprises at least one controller mapping sensory inputs to motor commands, comprising the steps:
- generating an expectation of the robot's own state and/or the robot's environment;
- sensing the robot's actual state and/or environment;
- comparing the actual state and/or environment with the generated expectation;
- modulating the controller's behaviour, if the robot's actual state and/or environment differ/differs from the expectation; and
- operating the controller without modulation otherwise.

2. The method according to claim 1, wherein the controller is activated or deactivated based on a designated fitness value and wherein modulating the controller's behaviour comprises the steps of adding a bias value to the fitness value of the controller.

3. The method according to claim 2, wherein the fitness value is set dynamically.

4. The method according to claim 1, further comprising the step of operating a visual attention system of the robot to select a proto-object from a list of proto-object provided by the visual attention system.

5. The method according to claim 4, further comprising the step of modulating the visual attention system to select a new proto-object (Visit-Request-Id).

6. The method according to claim 4, further comprising the step of modulating the visual attention system to prevent the selection of a given proto-object (Complete-Id).

7. The method according to claim 6, further comprising the step of modulating the visual attention system to make all proto-objects in the list of proto-object provided by the visual attention system available for selection (Clear).

8. Computer-readable medium, comprising instructions that, when executed on a computer, implement a method according to one of the preceding claims.

9. A device for controlling an interactive robot, wherein the robot comprises at least one controller mapping sensory inputs to motor commands, comprising:
- means for generating an expectation of the robot's own state and/or the robot's environment;
- means for sensing the robot's actual state and/or environment;
- means for comparing the actual state and/or environment with the generated expectation;
- means for modulating the controller's behaviour, if the robot's actual state and/or environment differ/differs from the expectation; and
- means for operating the controller without modulation otherwise.
